# EUROPÄISCHE PATENTSCHRIFT

(11) **EP 0 950 833 B1**
(45) Veröffentlichungstag und Bekanntmachung des Hinweises auf die Patenterteilung: **11.09.2002**
(21) Anmeldenummer: 99250108.0
(22) Anmeldetag: 08.04.1999
(51) Int. Cl.: F16H 57/02

(54) **Drehmomentstütze**
Torque support
Support de couple

(30) Priorität: 17.04.1998 DE 19817930
(43) Veröffentlichungstag der Anmeldung: 20.10.1999
(73) Patentinhaber: Demag Cranes & Components GmbH, 58300 Wetter (DE)
(72) Erfinder: Staggl, Roland, 58300 Wetter (DE); Flaig, Heinz, 44801 Bochum (DE); Gievers, Winfried, 58300 Wetter (DE); Osthoff, Hans-Hermann, 58300 Wetter (DE); Steinkopf, Jan-Helge, 58300 Wetter (DE); Saeftel, Josef Paul, 44575 Castrop-Rauxel (DE); Jansen, Gregor, 46244 Bottrop (DE); Stöber, Manfred, 58453 Witten (DE); Becker, Eberhard, 58093 Hagen (DE); Düllmann, Thomas, 58099 Hagen (DE)
(74) Vertreter: Meissner, Peter E., Dipl.-Ing.

(56) Entgegenhaltungen:
- EP-A- 0 255 021
- DE-A- 4 021 054
- DE-U- 29 722 631

## Beschreibung

Die Erfindung betrifft eine Drehmomentstütze gemäß dem Obergriff des Anspruchs 1.

Aus der DE 40 21 054 ist eine derartige zwischen einem Motor und einem Radblock angeordnete Drehmomentstütze bekannt. Diese ist plattenförmig ausgebildet und weist zwei parallele Anlageflächen auf. Eine der beiden Anlageflächen liegt am Motorgehäuse an und ist daran mittels Schrauben befestigt. Zur Abstützung der auftretenden Drehmomente ist die Drehmomentstütze zusätzlich an einer Stelle am Radblock befestigt, wobei die andere Anlagefläche zumindest teilweise am Radblockgehäuse anliegt. Der Abstand zwischen der Motorwelle und der Befestigungsstelle wird dabei möglichst groß gewählt. Die Verbindung zwischen Motor und Radblock erfolgt über eine Anflanschung aus ineinandergesteckten Verzahnungen.

Nachteilig bei dieser Drehmomentstütze ist, daß zwar Drehmomente zuverlässig und spielarm abgestützt werden und die Getriebewelle durch Querkräfte, die aus der Drehmomentenabstützung resultieren, nicht biegebeansprucht wird. Aufgrund der zunehmenden Verzahnungstoleranzen sind ineinandergesteckte, korrespondierende Verzahnungen mit zunehmender Baugröße und Beanspruchung praktisch nicht mehr sinnvoll.

Die Erfindung liegt die Aufgabe zugrunde, eine Drehmomentstütze anzugeben, bei der die aus der Drehmomentenabstützung resultierenden, auf die Getriebewelle wirkenden Querkräfte gering sind und gleichzeitig das wirkende Torsionsmoment spielarm und Lastspitzen dämpfend aufgenommen wird, ohne daß eine hohe Maßgenauigkeit wie bei der Verzahnungslösung erforderlich ist.

Die Lösung dieser Aufgabe ist gekennzeichnet durch die im Patentanspruch 1 angegebenen Merkmale. Durch die kennzeichnenden Merkmale der Unteransprüche 2 bis 7 ist die Drehmomentstütze in vorteilhafter Weise weiter ausgestaltet.

Die Erfindung sieht vor, daß in jede Durchgangsöffnung ein korrespondierender Kunststoff-Ringkörper mit an der dem Gehäuse der angetriebenen Einheit zugewandten Stirnseite radial nach außen verbreitertem Randbereich formschlüssig eingesteckt ist, der im montierten Zustand ein zwischen dem Gehäuse und der Drehmomentstütze angeordnetes elastisches Scheibenelement bildet. Dies dämpft auftretende Lastspitzen wirksam und ohne großen Aufwand.

Eine gleichmäßige Abstützung von auftretenden Drehmomenten wird erreicht, wenn der Grundkörper eine zentrale Öffnung aufweist, durch die sich die Antriebswelle im montierten Zustand hindurch erstreckt, und daß die Befestigungselemente jeweils mit gleichem radialen Abstand von der Öffnung angeordnet sind. Dafür sorgen auch die in gleichem Abstand zur Öffnung und damit zur Antriebswelle angeordneten Durchgangsöffnungen.

Die Drehmomentstütze ist zur Vereinfachung der Montage derart ausgebildet, daß jede Durchgangsöffnung an einem dem Gehäuse zugewandten stufenförmigen Vorsprung oder gekröpften Randbereich des Grundkörpers ausgebildet ist. Hierdurch ist es möglich, die Drehmomentstütze aus einer einfachen Metallplatte herzustellen.

Die Kompensation der auftretenden Fliehkräfte wird deutlich verringert, wenn der Winkelabstand der Befestigungsstellen vorzugsweise zwischen 90° und 150° liegt.

Besonders gute Dämpfungseigenschaften bei geringen Dämpfungswegen innerhalb des Kunststoffes ergeben sich, wenn der Kunststoff-Ringkörper aus Polyamid mit einem Glasfaseranteil gebildet ist.

Bei einer einfachen und leicht zu montierenden Ausführung ist das Gehäuse der angetriebenen Einheit mit Bolzen versehen, die aus dem Gehäuse herausragen, sich im montierten Zustand jeweils durch einen Kunststoff-Ringkörper hindurch erstrecken und an ihrem freien Ende jeweils durch einen Sicherungsring gehalten sind, der in eine am Bolzen ausgebildete Radialnut eingreift. Diese Lösung ist sehr kompakt und kleinbauend.

Ein Ausführungsbeispiel der Erfindung ist in der Zeichnung dargestellt und wird nachfolgend näher beschrieben. Es zeigen:
- Fig. 1: eine räumliche Darstellung eines Getriebegehäuses mit Drehmomentstütze,
- Fig. 2: eine Seitenansicht gemäß Fig. 1 mit angeflanschtem Radblock und
- Fig. 3: einen Querschnitt durch eine Befestigungsstelle mit Kunststoffringkörper.

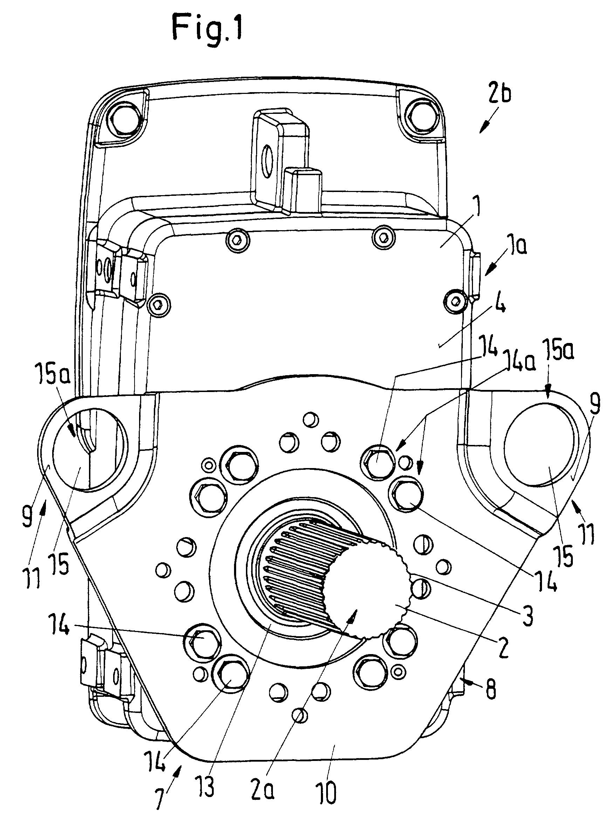

Fig. 1 zeigt ein Getriebegehäuse 1 eines Getriebes 1a mit einer nach außen geführten und mit einer Außenverzahnung 3 versehenen Getriebewelle 2 einer antreibenden Einheit 2b. Am Getriebegehäuse 1 ist eine senkrecht zur Getriebewelle 2 angeordnete Außenfläche 4 ausgebildet, und zwar auf der Seite, auf der die Getriebewelle 2 aus dem Getriebegehäuse 1 herausgeführt ist. An der Außenfläche 4 ist eine Drehmomentstütze 7 befestigt.

Die Drehmomentstütze 7 weist, bezogen auf Fig. 1, eine untere Anlagefläche 8 und eine obere Anlagefläche 9 auf, wobei die obere Anlagefläche 9 aus zwei kleineren in einer gemeinsamen Ebene liegenden beabstandeten Teilflächen besteht. Die Anlageflächen 8 und 9 verlaufen parallel zueinander. Wie Fig. 1 erkennen läßt, ist die Drehmomentstütze 7 aus einem plattenförmigen Grundkörper 10 gebildet, der gekröpfte Eckbereiche 11 aufweist, die vom Getriebegehäuse 1 wegweisen. Die gekröpfte Ausbildung der Eckbereiche 11 sorgt dafür, daß die Anlagefläche 9 mit Abstand und versetzt zur Anlagefläche 8 angeordnet ist, wobei der Abstand im Ausführungsbeispiel größer ist als die Dicke der zur Herstellung des Grundkörpers 10 verwendeten Metallplatte. Neben der gekröpften Form des Grundkörpers 10 ist selbstverständlich auch ein stufenförmiger Vorsprung denkbar, der auf der dann ebenen Platte des Grundkörpers 10 angeordnet ist.

Weiter zeigt Fig. 1, daß der trapezförmige Grundkörper 10 in der Mitte mit einer zentralen Öffnung 13 versehen ist, durch welche sich die Getriebewelle 2 erstreckt. Mit ihrer ebenen Anlagefläche 8 liegt die Drehmomentstütze 7 an der vorderen als Anlagefläche ausgebildeten Außenfläche 4 des Getriebegehäuses 1 an. Lösbar befestigt ist die Drehmomentstütze 7 am Getriebegehäuse 1 mittels Schrauben 14 als Befestigungselemente 14a.

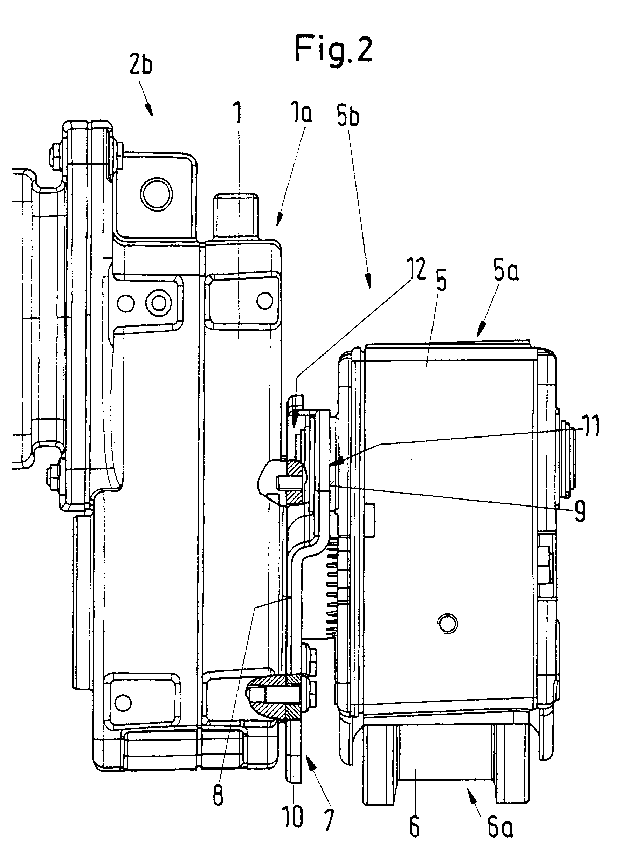

In den beiden oberen, gekröpften Eckbereichen 11 ist jeweils eine Durchgangsöffnung 15 vorgesehen, die als Befestigungsstellen 15a der Drehmomentstütze 7 am Gehäuse 5 eines Radblocks 5a als angetriebenen Einheit 5b (s. Fig. 2) dienen. Aus Fig. 1 ist ebenfalls entnehmbar, daß die Mittelpunkte der Durchgangsöffnungen 15 im gleichen radiale Abstand von der zentralen Öffnung 13 bzw. der Getriebeachse 2 angeordnet sind.

Der Winkelabstand der Durchgangsöffnungen 15 zueinander beträgt im Ausführungsbeispiel etwa 120°; vorteilhaft ist ein Winkelbereich zwischen 90° und 150°. Bei sehr lang ausgebildeten Drehmomentstützen 7 ist auch ein Winkelabstand nahe 180° erzielbar.

Fig. 2 zeigt eine Seitenansicht der Anordnung gemäß Fig. 1 mit dem angeflanschten Gehäuse 5 sowie die zwischen dem Getriebe 1a und dem Gehäuse 5 angeordnete Drehmomentstütze 7. In dem Gehäuse 5 ist ein Laufrad 6 drehgelagert, das mit einem Abschnitt der Lauffläche unten aus dem Gehäuse 5 herausragt. Die Getriebewelle 2 ist in eine Innenverzahnung der Laufradachse eingesteckt (nicht dargestellt). Fig. 2 läßt aber erkennen, daß die Drehachse der Getriebewelle 2 mit der Drehachse des angetriebenen Laufrads 6 identisch ist.

Der kompakt ausgebildete Radblock 5a gemäß Fig. 2 begrenzt durch die Außenkontur seines quaderförmigen Gehäuses 5 den maximal möglichen Abstand der Durchgangsöffnungen 15 voneinander. Den weitaus größten Raum innerhalb des Gehäuses 5 nimmt das Laufrad 6 ein; für die Befestigung der Drehmomentstütze 7 stehen bei kompakter Bauweise folglich nur die Eckbereiche des Gehäuses 5 zur Verfügung. Wie Fig. 2 erkennen läßt, bewirkt das Kröpfen der beiden oberen Eckbereiche 11 der Drehmomentstütze 7 zum Gehäuse 5 hin einen Freiraum 12, der die Befestigung der Drehmomentstütze 7 am Gehäuse 5 des Radblocks 5a erleichtert.

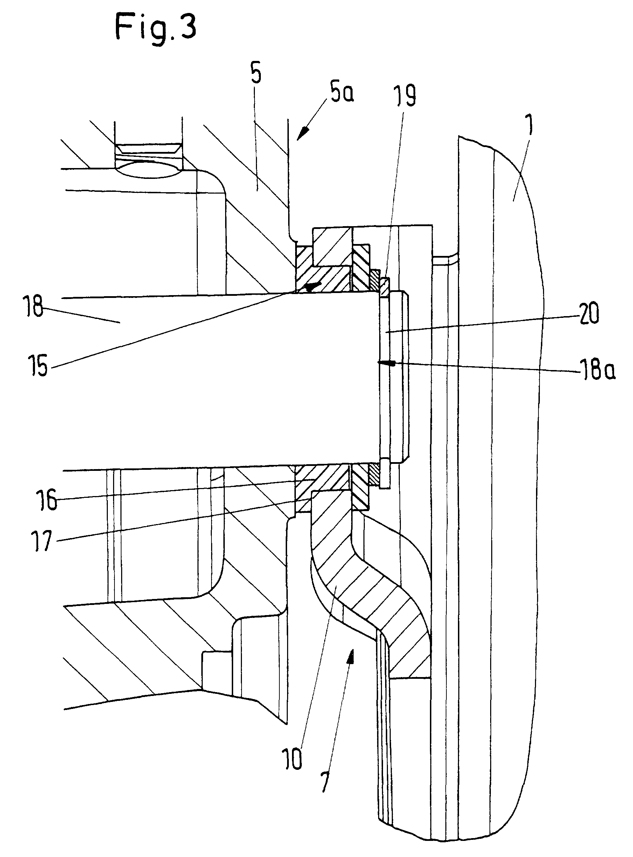

Fig. 3 zeigt eine Befestigungsstelle 15a der Drehmomentstütze 7 im Querschnitt in vergrößerter Darstellung. Ebenfalls erkennbar sind ein Kunststoffringkörper 16, welcher in die Durchgangsbohrung 15 jeweils eingesetzt ist. Als Kunststoff eignet sich besonders Polyamid mit einem Glasfaseranteil; diese Mischung ist schwingungsdämpfend und weist nur geringe Schwingungsamplituden auf. Wie Fig. 3 zeigt, ist der Ringkörper 16 im Randbereich 17 radial nach außen verbreitert, so daß der formschlüssig eingesteckte Ringkörper 16 nicht durch die Durchgangsöffnung 15 hindurchrutscht. Der verbreiterte Randbereich 17 befindet sich an der dem Gehäuse 5 zugewandten Stirnseite und bildet im montierten Zustand ein zwischen dem Gehäuse 5 und der Drehmomentstütze 7 angeordnetes elastisches Scheibenelement. Somit liegt die Drehmomentstütze 7 nicht direkt am Radblock 5a an. Zwischen der Anlagefläche des Radblocks und der Drehmomentstütze 7 ist sozusagen ein elastischer Puffer nach Art einer Unterlegscheibe angeordnet. Die Befestigung der Drehmomentstütze 7 erfolgt mittels Befestigungsbolzen 18, die fest mit dem Gehäuse 5 verbunden sind und mit einem Ende aus dem Gehäuse 5 herausragen. Dieses Ende ist jeweils durch die Öffnung 18a im Kunststoffringkörper 16 hindurchgesteckt. Gehalten wird die Drehmomentstütze 7 am Radblock 5 durch einen Sicherungsring 19, der in eine am Bolzen 18 ausgebildete Radialnut 20 angreift und den Bolzen 18 gegen Herausrutschen sichert.

### Bezugszeichenliste:

- 1: Getriebegehäuse
- 1a: Getriebe
- 2: Getriebewelle/-achse
- 2b: Einheit
- 3: Außenverzahnung
- 4: Außenfläche
- 5: Gehäuse
- 5a: Radblock
- 5b: Einheit
- 6: Laufrad
- 7: Drehmomentstütze
- 8: Anlagefläche
- 9: Anlagefläche
- 10: Grundkörper
- 11: Eckbereich
- 12: Freiraum
- 13: zentrale Öffnung
- 14: Schrauben
- 14a: Befestigungselemente
- 15: Durchgangsöffnung
- 15a: Befestigungsstellen
- 16: Kunststoffringkörper
- 17: Randbereich
- 18: Befestigungsbolzen
- 18a: Öffnung
- 19: Sicherungsring
- 20: Radialnut

## Patentansprüche

1. Drehmomentstütze (7), insbesondere für Radblöcke, die zwischen einem Getriebegehäuse (1) mit herausgeführter Antriebswelle (2) und einem Gehäuse (5) einer angetriebenen Einheit (5b) angeordnet ist, mit einem plattenförmigen an dem Getriebegehäuse (1) mit Befestigungselementen lösbar befestigten Grundkörper (10) der zur Befestigung an dem Gehäuse (5) der angetriebenen Einheit (5b) mindestens zwei mit Durchgangsöffnungen (15) versehene Befestigungsstellen (15a) aufweist,
**dadurch gekennzeichnet,**
**daß** in jede Durchgangsöffnung (15) ein korrespondierender Kunststoff-Ringkörper (16) mit an der dem Gehäuse (5) der angetriebenen Einheit (5b) zugewandten Stirnseite radial nach außen verbreitertem Randbereich (17) formschlüssig eingesteckt ist, der im montierten Zustand ein zwischen dem Gehäuse (5) und der Drehmomentstütze (7) angeordnetes elastisches Scheibenelement bildet.

2. Drehmomentstütze nach Anspruch 1,
**dadurch gekennzeichnet,**
**daß** der Grundkörper (10) eine zentrale Öffnung (13) aufweist, durch die sich die Antriebswelle (2) im montierten Zustand hindurch erstreckt, und daß die Befestigungselemente (14a) jeweils mit gleichem radialen Abstand von der Öffnung (13) angeordnet sind.

3. Drehmomentstütze nach Anspruch 1 oder 2,
**dadurch gekennzeichnet,**
**daß** die Durchgangsöffnungen (15) gleichen Abstand zur Öffnung (13) und damit zur Antriebswelle (2) aufweisen.

4. Drehmomentstütze nach einem der Ansprüche 1 bis 3,
**dadurch gekennzeichnet,**
**daß** jede Durchgangsöffnung (15) an einem dem Gehäuse (5) zugewandten stufenförmigen Vorsprung oder gekröpften Randbereich (17) des Grundkörpers (10) ausgebildet ist.

5. Drehmomentstütze nach einem der Ansprüche 1 bis 4,
**dadurch gekennzeichnet,**
**daß** der Winkelabstand der Befestigungsstellen (15a) vorzugsweise zwischen 90 und 150 Grad beträgt.

6. Drehmomentstütze nach einem der Ansprüche 1 bis 5,
**dadurch gekennzeichnet,**
**daß** der Kunststoff-Ringkörper (16) aus Polyamid mit einem Glasfaseranteil zur Verstärkung gebildet ist.

7. Drehmomentstütze nach einem der Ansprüche 1 bis 6,
**dadurch gekennzeichnet,**
**daß** das Gehäuse (5) der angetriebenen Einheit (5b) mit Bolzen (18) versehen ist, die aus dem Gehäuse (5) herausragen, sich im montierten Zustand jeweils durch einen Kunststoff-Ringkörper (16) hindurch erstrecken und an ihrem freien Ende jeweils durch einen Sicherungsring (19) gehalten sind, der in eine am Bolzen (18) ausgebildete Radialnut (20) eingreift.

## Claims

1. Torque support (7), particularly for wheel blocks, which is positioned between a gearbox housing (1) with a drive shaft (2) leading out from it, and a housing (5) of a powered unit (5b), having a plate-shaped base element (10) which is attached in a detachable manner, by means of securing elements, to the gearbox housing (1), and which has at least two securing points (15a) with bore holes (15) to attach it to the housing (5) of the powered unit (5b),
**characterised in that**
into each bore hole (15) is positively inserted a corresponding plastic ring (16) with, on the surface facing towards the housing (5) of the powered unit (5b), an edge area (17) extending radially outwards, and which ring forms, when assembled, a flexible washer element positioned between the housing (5) and the torque support (7).

2. Torque support as in Claim 1,
**characterised in that**
the base element (10) has a central opening (13), through which passes the drive shaft (2) when assembled; and **in that** the securing elements (14a) are each positioned at the same radial distance from the opening (13).

3. Torque support as in Claim 1 or 2,
**characterised in that**
the bore holes (15) are at the same distance from the opening (13) and thus from the drive shaft (2).

4. Torque support as in one of Claims 1 to 3,
**characterised in that**
each bore hole (15) is made in a stepped projection or offset edge area (17), facing the housing (5), of the base element (10).

5. Torque support as in one of Claims 1 to 4,
**characterised in that**
the angular distance of the securing points (15a) is preferably between 90 and 150 degrees.

6. Torque support as in one of Claims 1 to 5,
**characterised in that**
the plastic ring (16) is made of polyamide with a proportion of glass fibre for reinforcement.

7. Torque support as in one of Claims 1 to 6,
**characterised in that**
the housing (5) of the powered unit (5b) has bolts (18) which project from the housing (5), each of which extends through a plastic ring (16) when assembled, and each of which has, at its free end, a securing ring (19) which engages with a radial channel (20) formed on the bolt (18).

## Revendications

1. Support de couple (7), en particulier pour des trains de pignons, qui est disposé entre un carter de transmission (1) présentant un arbre d'entraînement (2) sortant et un carter (5) d'une unité entraînée (5b), présentant un corps de base (10) en forme de plaque fixé de façon amovible au carter de transmission (1) par des éléments de fixation, la fixation au niveau du carter (5) de l'unité entraînée (5b) se faisant au moins par deux points de fixation (15a) munis d'ouvertures de passage (15),
**caractérisé en ce que**, dans chaque ouverture de passage (15), est inséré par conjonction de forme un corps annulaire en matériau synthétique correspondant (16) présentant une zone périphérique (17) élargie vers l'extérieur dans la direction radiale au niveau de la face avant orientée vers le carter (5) de l'unité entraînée (5b), laquelle zone, à l'état monté, forme un élément en disque élastique disposé entre le carter (5) et le support de couple (7).

2. Support de couple selon la revendication 1,
**caractérisé en ce que** le corps de base (10) présente une ouverture centrale (13) par laquelle passe l'arbre de transmission (2) à l'état monté et **en ce que** les éléments de fixation (14a) sont respectivement disposés selon le même écart radial par rapport à l'ouverture (13).

3. Support de couple selon la revendication 1 ou 2,
**caractérisé en ce que** les ouvertures de passage (15) présentent le même écart par rapport à l'ouverture (13) et par conséquent à l'arbre d'entraînement (2).

4. Support de couple selon l'une des revendications 1 à 3,
**caractérisé en ce que** chaque ouverture de passage (15) est formée au niveau d'une saillie en forme de marche orientée vers le carter (5) ou d'une zone périphérique coudée (17) du corps de base (10).

5. Support de couple selon l'une des revendications 1 à 4,
**caractérisé en ce que** l'écart angulaire entre les points de fixation (15a) est de préférence compris entre 90 et 150 degrés.

6. Support de couple selon l'une des revendications 1 à 5,
**caractérisé en ce que** le corps annulaire en matériau synthétique (16) est formé à partir de polyamide présentant une fraction de fibres de verre à des fins de renforcement.

7. Support de couple selon l'une des revendications 1 à 6,
**caractérisé en ce que** le carter (5) de l'unité entraînée (5b) est pourvu de boulons (18) qui font saillie hors du carter (5), s'étendent respectivement à l'état monté par un corps annulaire en matériau synthétique (16) et sont maintenus respectivement au niveau de leur extrémité libre par un anneau de retenue (19) qui s'insère dans une rainure radiale (20) formée au niveau d'un boulon (18).
